# DEMANDE DE BREVET EUROPEEN

(11) **EP 1 211 126 A1**
(43) Date de publication de la demande: **05.06.2002**
(21) Numéro de dépôt: 01402672.8
(22) Date de dépôt: 16.10.2001
(51) Int. Cl.: B60N 2/36, B60N 2/30

(54) **Agencement d'un ensemble de sièges dans un habitacle de véhicule automobile**

(30) Priorité: 29.11.2000 FR 0015442
(71) Demandeur: Peugeot Citroen Automobiles SA, 92200 Neuilly sur Seine (FR)
(72) Inventeur: Levitre, Gilles, 92230 Gennevilliers (FR); Cazes, Christophe, 75009 Paris (FR)
(74) Mandataire: Lanceplaine, Jean-Claude

(57) **Abrégé**

L'invention concerne un agencement de sièges dans un habitacle de véhicule automobile, du type comportant trois rangées de sièges, une rangée de sièges avant, une rangée de sièges intermédiaires et une rangée de sièges arrière. La rangée de sièges intermédiaires comprend au moins une assise (21) et au moins un dossier (22) déplaçables par pivotement entre une position d'utilisation et une position escamotée et la rangée de sièges arrière comprend au moins une assise (41) et au moins un dossier (42) déplaçables par retournement entre une position d'utilisation et une position escamotée dans laquelle au moins ladite assise est placée dans un logement (30) ménagé au-dessous de la rangée de sièges intermédiaires et forme une partie du plancher du véhicule automobile.

## Description

La présente invention concerne un agencement d'un ensemble de sièges dans un habitacle de véhicules automobiles.

Certains types de véhicules automobiles sont équipés, derrière la rangée de sièges avant, d'une ou de plusieurs rangées de sièges qui sont modulables de façon à adapter l'habitabilité du véhicule en fonction du nombre de passagers et/ou des charges à transporter.

Pour cela, on connaît des sièges qui sont conçus pour pouvoir basculer l'assise derrière la rangée de sièges située devant et rabattre le dossier de façon à augmenter le volume de chargement.

Mais, les solutions utilisées jusqu'à présent ne permettent pas, par des manoeuvres simples et sans effort important, de replier les sièges et d'obtenir un plancher de chargement continu et plat.

On connaît également des sièges démontables qui peuvent être enlevés pour agrandir le volume de chargement.

Le principal inconvénient de cette solution réside dans la nécessité du démontage.

En effet, il faut libérer les différents sièges de leur ancrage sur le plancher du véhicule et ranger les sièges démontés, en-dehors du véhicule, dans des locaux. Lorsque l'on a besoin d'une place de passager supplémentaire, il faut de nouveau rechercher le siège et procéder à son remontage. Ainsi, l'adaptation de l'espace interne du véhicule en fonction de son utilisation nécessite un temps de préparation et des efforts importants.

De plus, en milieu urbain, le possesseur d'un tel véhicule ne dispose pas toujours d'un local permettant le stockage des sièges enlevés.

L'invention a pour but d'éviter ces inconvénients en proposant un agencement de sièges dans un habitacle de véhicules automobiles permettant, sans enlèvement de sièges et en effectuant des manoeuvres simples, de moduler le nombre de places en fonction des passagers ainsi que le volume de chargement selon les charges à transporter.

L'invention a donc pour objet un agencement d'un ensemble de sièges dans un habitacle de véhicules automobiles, du type comportant, sur un plancher de ce véhicule, trois rangées de sièges, une rangée de sièges avant comprenant deux sièges formés chacun par une assise et un dossier, une rangée de sièges intermédiaires et une rangée de sièges arrière, caractérisé en ce que la rangée de sièges intermédiaires comprend au moins une assise et au moins un dossier déplaçables par pivotement entre une position d'utilisation et une position escamotée dans laquelle ledit dossier est replié sur l'assise correspondante et dans laquelle ladite assise et ledit dossier libèrent le plancher derrière la rangée de sièges avant et en ce que la rangée de sièges arrière comprend au moins une assise et au moins un dossier déplaçables par retournement entre une position d'utilisation et une position escamotée dans laquelle au moins ladite assise est placée dans un logement ménagé au-dessous de la rangée de sièges intermédiaires.

Selon d'autres caractéristiques de l'invention :
- ladite assise et ledit dossier de la rangée de sièges intermédiaires forment une banquette ou trois sièges indépendants ou deux sièges indépendants,
- ladite assise et ledit dossier de la rangée de sièges intermédiaires sont déplaçables par un mécanisme de pivotement entre la position d'utilisation et la position escamotée dans laquelle cette assise et ce dossier sont placés sensiblement verticalement derrière la rangée de sièges avant,
- ladite assise et ledit dossier de la rangée de sièges intermédiaires sont déplaçables par un mécanisme de pivotement entre la position d'utilisation et la position escamotée dans laquelle cette assise et ce dossier sont placés sensiblement horizontalement dans un logement ménagé au-dessous de la rangée de sièges avant,
- ladite assise et ledit dossier des sièges latéraux de la rangée de sièges intermédiaires sont déplaçables par un mécanisme de pivotement entre la position d'utilisation et la position escamotée dans laquelle les assises et les dossiers sont placés sensiblement horizontalement dans un logement ménagé au-dessous de la rangée de sièges avant, et en ce que ladite assise et ledit dossier du siège central sont déplaçables entre la position d'utilisation et la position escamotée dans laquelle cette assise et ce dossier sont placés sensiblement horizontalement derrière la rangée de sièges avant,
- ladite assise et ledit dossier de la rangée de sièges arrière forment une banquette ou deux sièges indépendants,
- ladite assise et ledit dossier de la rangée de sièges arrière sont déplaçables au moyen d'un mécanisme à bascule par retournement selon une rotation de 180° entre la position d'utilisation et la position escamotée dans laquelle cette assise est placée sensiblement horizontalement dans le logement ménagé au-dessous de la rangée de sièges intermédiaires et ce dossier est placé sensiblement horizontalement dans un logement ménagé au-dessous de la rangée de sièges avant,
- ladite assise et ledit dossier de la rangée de sièges arrière sont déplaçables au moyen d'un mécanisme à bascule par retournement selon une rotation de 180° entre la position d'utilisation et la position escamotée dans laquelle le dossier est rabattu sur l'assise et dans laquelle cette assise_et ce dossier repliés sont placés sensiblement horizontalement dans le logement ménagé au-dessous de la rangée de sièges intermédiaires.

D'autres caractéristiques et avantages de l'invention apparaîtront au cours de la description qui va suivre, donnée à titre d'exemple et faite en se référant aux dessins annexés, sur lesquels :
- la figure 1 est une vue schématique en élévation d'un habitacle de véhicule automobile dans lequel sont agencés des sièges,
- la figure 2 est une vue schématique de dessus montrant un premier mode de réalisation de l'agencement des sièges en position d'utilisation,
- les figures 3 à 5 sont des vues schématiques en élévation montrant le basculement des rangées de sièges intermédiaires et arrière selon le premier mode de réalisation,
- la figure 6 est une vue schématique en élévation montrant un deuxième mode de réalisation de l'agencement des sièges en position d'utilisation,
- les figures 7 à 9 sont deux vues schématiques en élévation montrant le basculement des rangées de sièges intermédiaires et arrière selon le deuxième mode de réalisation,
- la figure 10 est une vue schématique de dessus montrant un troisième mode de réalisation de l'agencement des sièges en position d'utilisation,
- les figures 11 et 12 sont des vues schématiques en élévation montrant le basculement des rangées de sièges intermédiaires et arrière selon le troisième mode de réalisation,
- les figures 13 et 14 sont des vues schématiques en élévation montrant le basculement des rangées de sièges intermédiaires et arrière selon un quatrième mode de réalisation.

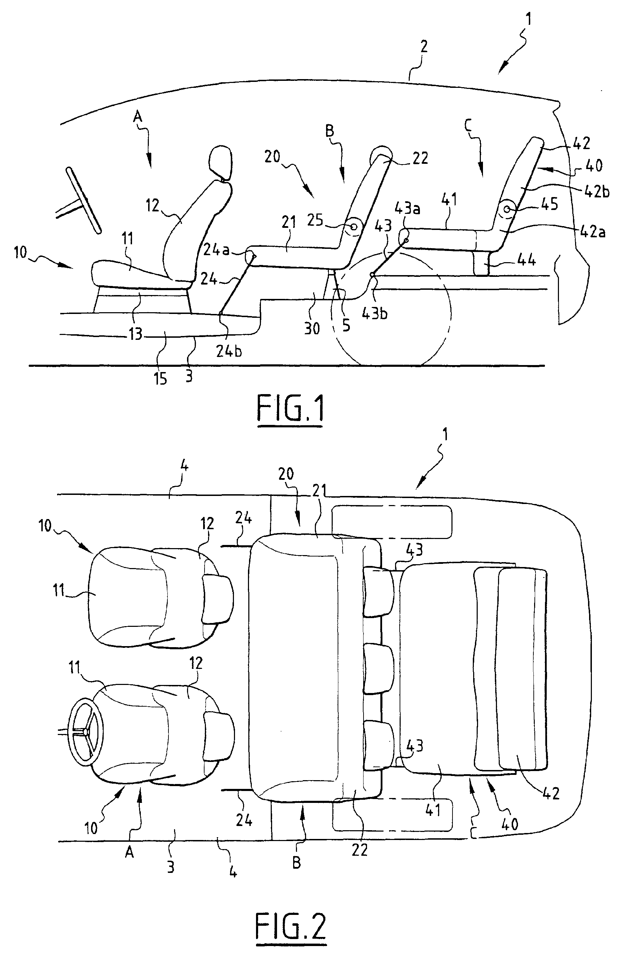

Sur les figures 1 et 2, on a représenté schématiquement un véhicule automobile comportant une carrosserie 1 dont on a montré une partie du pavillon 2 et une partie du plancher 3 reliés entre eux par des montants latéraux 4.

Le véhicule automobile comporte, dans le sens de la marche, trois rangées de sièges, une rangée de sièges avant A, une rangée de sièges intermédiaires B et une rangée de sièges arrière C.

Dans l'ensemble des exemples de réalisation représentés sur les figures, la rangée de sièges avant A se compose de deux sièges 10 comprenant chacun une assise 11 et un dossier 12. Chaque siège 10 est monté déplaçable longitudinalement sur des glissières 13 afin de pouvoir régler la position de chacun de ces sièges en fonction de la morphologie du passager.

La rangée de sièges intermédiaires B comprend au moins une assise 21 et au moins un dossier 22 formant, selon les exemples de réalisation, une banquette ou trois sièges indépendants ou deux sièges indépendants.

La rangée de sièges arrière C comprend au moins une assise 41 et au moins un dossier 42 formant une banquette ou deux sièges indépendants.

Ainsi que représenté notamment à la figure 1, le plancher 3 comporte, au-dessous de la rangée de sièges avant A, un premier logement 15 et, au-dessous de la rangée de sièges intermédiaires B, un second logement 30, la profondeur du premier logement 15 étant supérieure à la profondeur du second logement 30.

Dans le premier mode de réalisation représenté sur les figures 2 à 5, l'assise 21 et le dossier 22 déterminent une banquette 20, ledit dossier 22 étant monté articulé sur ladite assise 21 au moyen d'un axe horizontal 25.

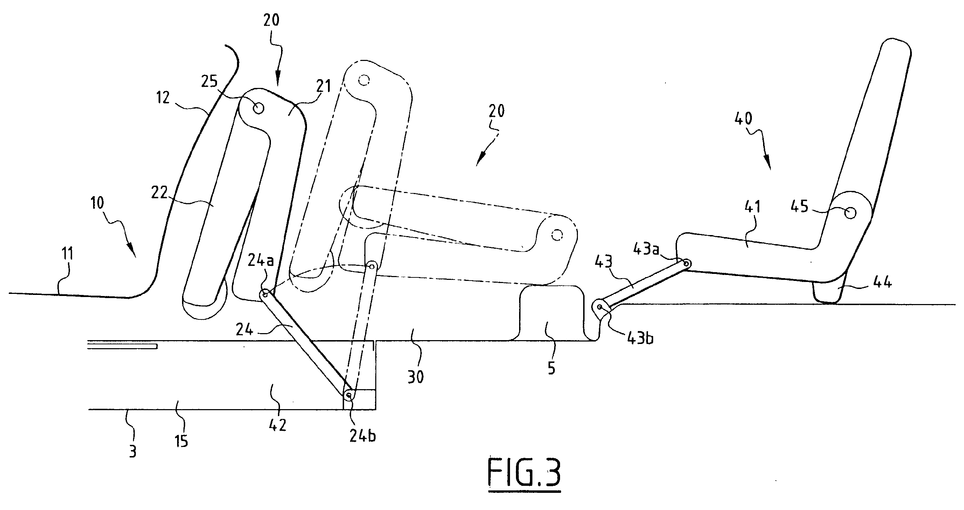

Dans ce premier mode réalisation, la banquette 20 est déplaçable entre une position d 'utilisation dans laquelle cette banquette 20 est en appui sur le plancher 3 par au moins un pied 5, comme représenté à la figure 1, et une position escamotée dans laquelle le dossier 22 est replié sur l'assise 21 et dans laquelle cette assise 21 et ce dossier 22 sont placés sensiblement verticalement derrière la rangée de sièges avant A afin de libérer le plancher derrière ladite rangée de sièges avant A, comme représenté à la figure 3.

Pour permettre le déplacement de la banquette 20 entre sa position d'utilisation et sa position escamotée, cette banquette 20 comporte un mécanisme de pivotement constitué par au moins une bielle 24 dont une première extrémité 24a est montée articulée en-dessous de l'assise 21 et dont une seconde extrémité 24b est montée articulée sur le fond du logement 15 ménagé au-dessous de la rangée de sièges avant A.

De préférence, le mécanisme de pivotement est constitué de deux bielles 24 s'étendant parallèlement l'une par rapport à l'autre.

Pour déplacer la banquette 20 de sa position d'utilisation dans sa position escamotée, l'utilisateur rabat le dossier 22 sur l'assise 21 et ensuite soulève la banquette 20 pour l'amener en position sensiblement verticale derrière les dossiers 12 de la rangée de sièges avant A.

La rangée de sièges intermédiaires B peut être constituée par trois ou deux sièges indépendants déplaçables chacun entre la position d 'utilisation et la position escamotée au moyen des bielles 24.

Dans ce mode de réalisation représenté sur les figures 2 à 5, l'assise 41 et le dossier 42 de la rangée de sièges arrière C déterminent une banquette 40. Le dossier 42 comporte, d'une part, une portion inférieure 42a solidaire de l'assise 41 en formant avec cette assise 41 un L et, d'autre part, une portion supérieure 42b articulée sur ladite portion inférieure 42a au moyen d'un axe d'articulation 45 horizontal.

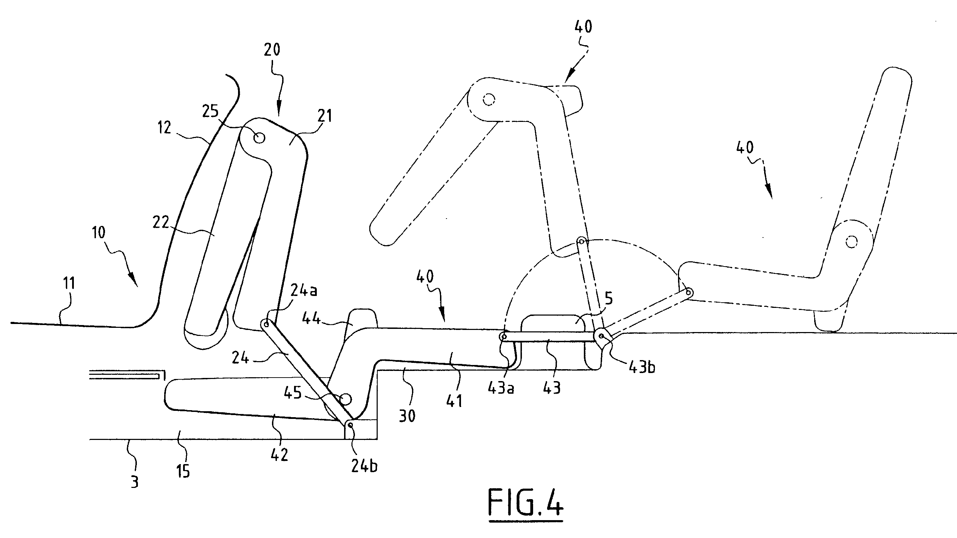

Comme représenté à la figure 4, l'assise 41 et le dossier 42 formant la banquette 40 sont déplaçables, au moyen d'un mécanisme à bascule 43, par retournement selon une rotation de 180° entre une position d'utilisation dans laquelle cette banquette 40 est en appui sur le plancher 3 au moyen d'au moins un pied 44, et une position escamotée dans laquelle l'assise 41 est placée sensiblement horizontalement dans le logement 30 ménagé au-dessous de la rangée de sièges intermédiaires B et dans laquelle le dossier 42 est placé sensiblement horizontalement dans le logement 15 ménagé au-dessous de la rangée de sièges avant A.

Le mécanisme à bascule est constitué par au moins une bielle 43 dont une première extrémité 43a est montée articulée au-dessous de l'assise 41 et dont une seconde extrémité 43b est montée articulée sur le plancher 3 au bord du logement 30.

Pour déplacer la banquette 40 entre la position d'utilisation et la position escamotée, il suffit à l'utilisateur de soulever cette banquette 40 et de la faire basculer par l'intermédiaire des bielles 43 pour disposer l'assise 41 dans le logement 30 et le dossier 42 dans le logement 15, comme représenté à la figure 4.

Dans la position escamotée de la banquette 20 et de la banquette 40 (figure 4), les matelassures des assises 21 et 41 et des dossiers 22 et 42 sont protégées contre toute salissure et le plancher 3 présente une surface de chargement importante.

Selon une variante, l'assise 41 et le dossier 42 peuvent former deux sièges indépendants et déplaçables chacun entre la position d'utilisation et la position escamotée. Dans ce cas, le mécanisme à bascule est constitué, pour chaque siège, par deux bielles 43 s'étendant parallèlement l'une par rapport à l'autre.

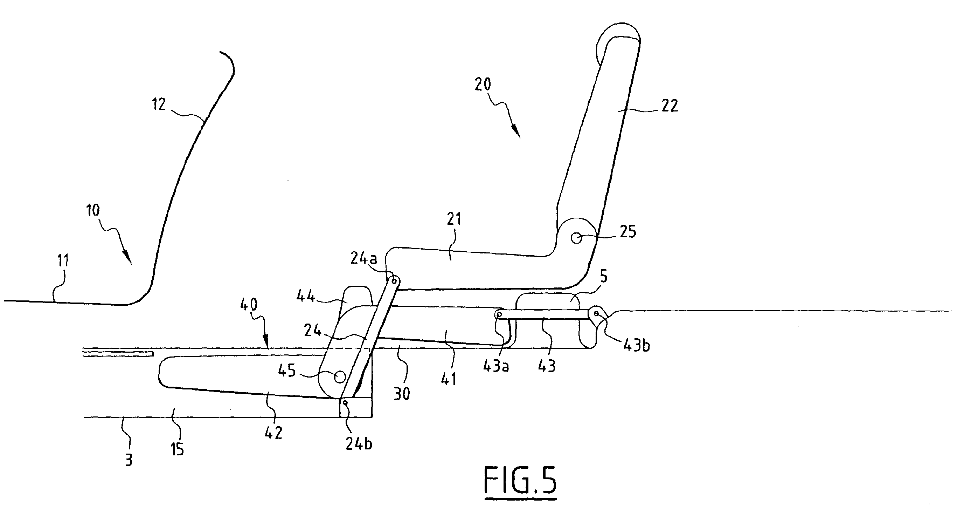

La position escamotée de la banquette 40 dans laquelle l'assise 41 est placée horizontalement dans le logement 30 et le dossier 42 est placé horizontalement dans le logement 15 permet de pouvoir replacer la banquette 20 en position d'utilisation afin de moduler le nombre de places en fonction des passagers transportés, ainsi que représenté à la figure 5.

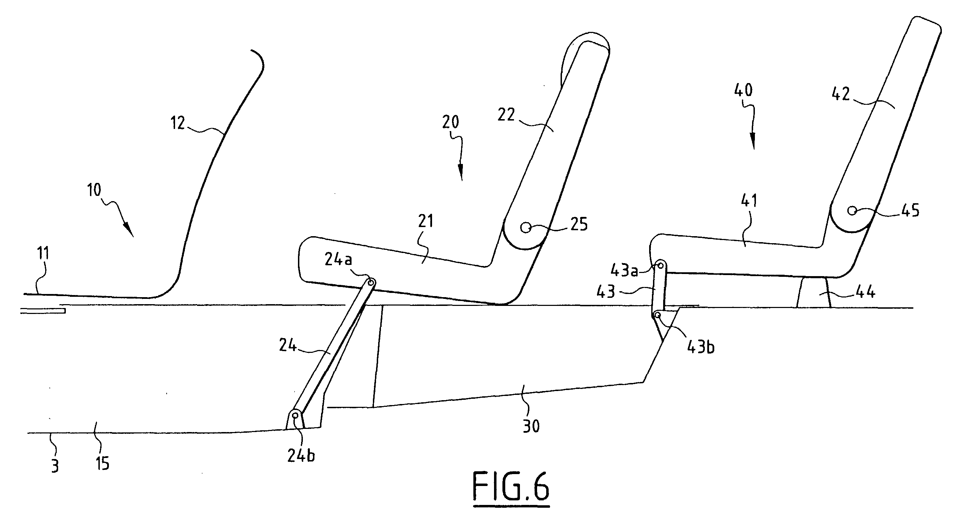

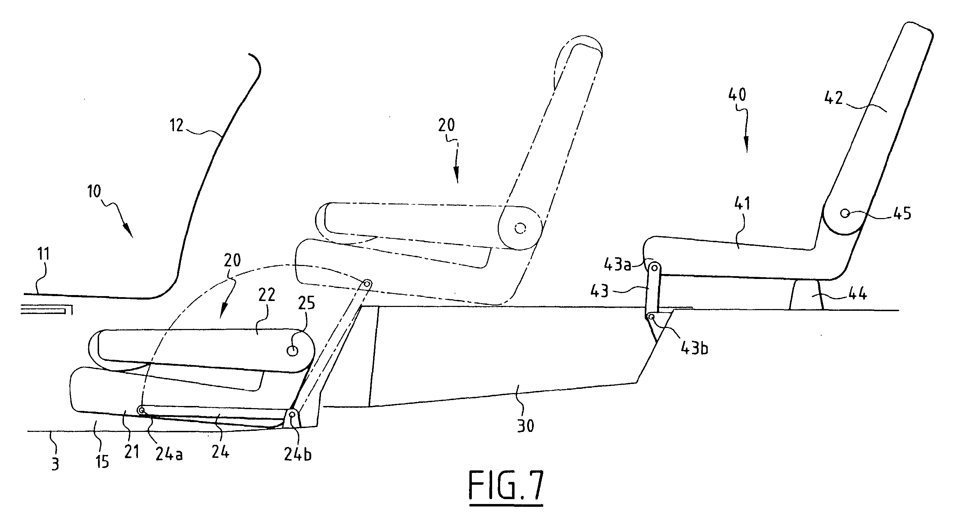

Selon un autre mode de réalisation montré aux figures 6 à 8, l'assise 21 et le dossier 22 formant la banquette 20 de la rangée de sièges intermédiaires B sont déplaçables par un mécanisme de pivotement 24 entre une position d'utilisation dans laquelle cette banquette 20 est en appui sur le plancher 3 et une position escamotée dans laquelle le dossier 22 est replié sur l'assise 21 et dans laquelle cette assise 21 et ce dossier 22 sont placés sensiblement horizontalement dans le logement 15 ménagé au-dessous de la rangée de sièges avant, comme montré à la figure 7.

Dans ce cas aussi, le mécanisme de pivotement est constitué par au moins une bielle 24 et de préférence par deux bielles 24 s'étendant parallèlement l'une par rapport à l'autre, dont une première extrémité 24a est montée articulée au-dessous de l'assise 21 et dont une seconde extrémité 24b est montée articulée sur le fond du logement 15.

Pour déplacer la banquette 20 entre la position d'utilisation et la position escamotée, l'utilisateur rabat le dossier 22 sur l'assise 21 et ensuite fait pivoter la banquette 20 par l'intermédiaire des bielles 24 pour amener ladite banquette 20 dans le logement 15.

L'assise 21 et le dossier 22 peuvent former trois ou deux sièges indépendants déplaçables chacun entre la position d'utilisation et la position escamotée.

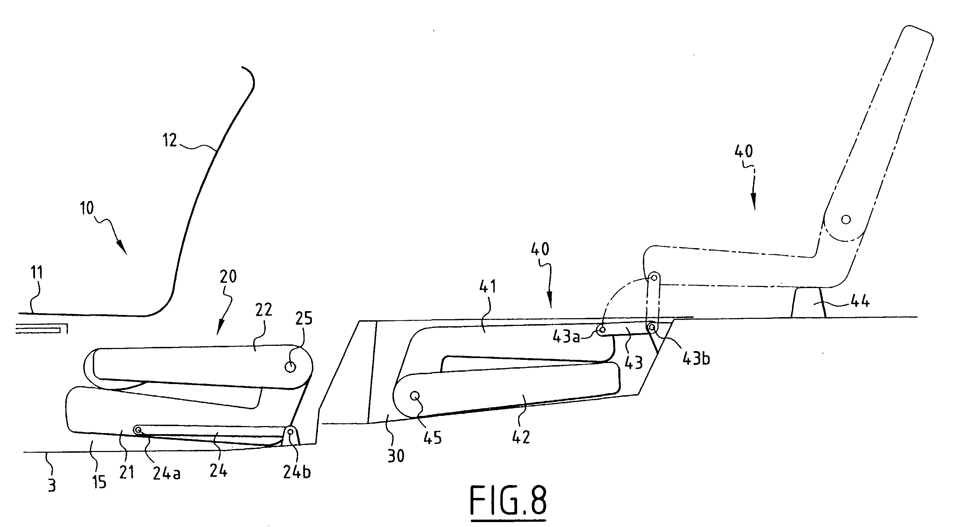

Dans ce mode de réalisation, l'assise 41 et le dossier 42 formant la banquette 40 de la rangée de sièges arrière C sont déplaçables au moyen d'un mécanisme à bascule 43 par retournement selon une rotation de 180° entre la position d'utilisation représentée à la figure 7 et la position escamotée représentée à la figure 8, dans laquelle le dossier 42 est rabattu sur l'assise 41 et dans laquelle cette assise 41 et ce dossier 42 replié sont placés sensiblement horizontalement dans le logement 30 ménagé au-dessous de la rangée de sièges intermédiaires B.

Le mécanisme à bascule est formé par au moins une bielle 43 et de préférence par deux bielles 43 s'étendant parallèlement l'une par rapport à l'autre, dont une première extrémité 43a est montée articulée à l'avant de l'assise 41 et dont une second extrémité 43b est montée articulée sur le plancher 3 au bord du logement 30.

Pour déplacer la banquette 40 de sa position d'utilisation dans sa position escamotée, l'utilisateur commence par rabattre le dossier 42 sur l'assise 41 et ensuite, bascule la banquette 40 en lui faisant exécuter une rotation de 180° pour placer ladite banquette 40 dans le logement 30 ménagé au-dessous de la rangée de sièges intermédiaires B, le dossier 42 étant disposé au-dessous de l'assise 41.

Dans la position escamotée de la rangée de sièges intermédiaires et de la rangée de sièges arrière C, les matelassures des assises 21 et 41 et des dossiers 22 et 42 sont protégées d'éventuelles salissures et le plancher 3 présente, derrière la rangée de sièges avant A, une surface de chargement importante (figure 8).

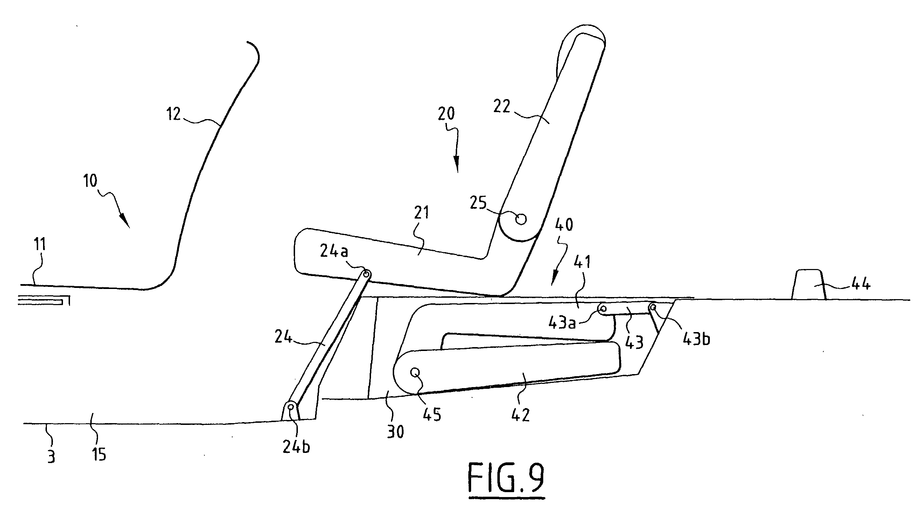

Par ailleurs, la position escamotée de la banquette 40 dans le logement 30 permet de pouvoir replacer la banquette 20 de la rangée de sièges intermédiaires B en position d'utilisation afin de moduler le nombre de places en fonction des passagers transportés, ainsi que représenté à la figure 9.

Dans le cas où la rangée de sièges intermédiaires B est formée de deux ou trois sièges indépendants et la rangée de sièges arrière C est formée de deux sièges indépendants, chaque siège peut être placé dans la position escamotée indépendamment des autres sièges permettant, de ce fait, de moduler le nombre de places dans le véhicule et d'adapter la surface de chargement du plancher en fonction des charges à transporter.

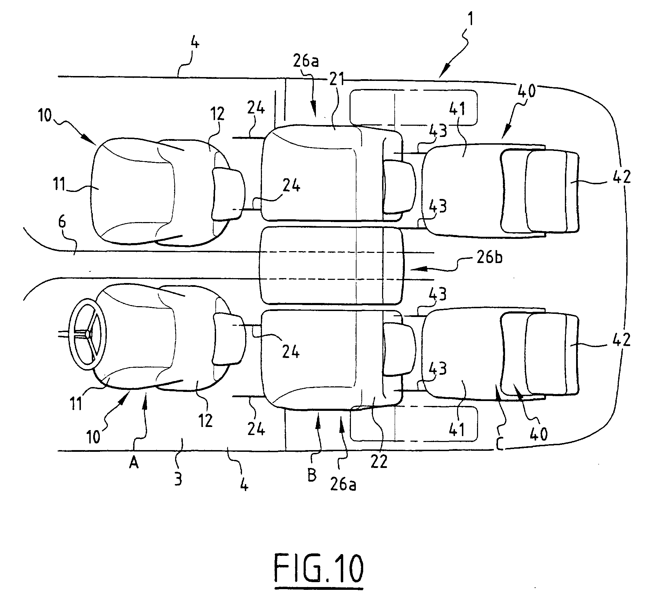

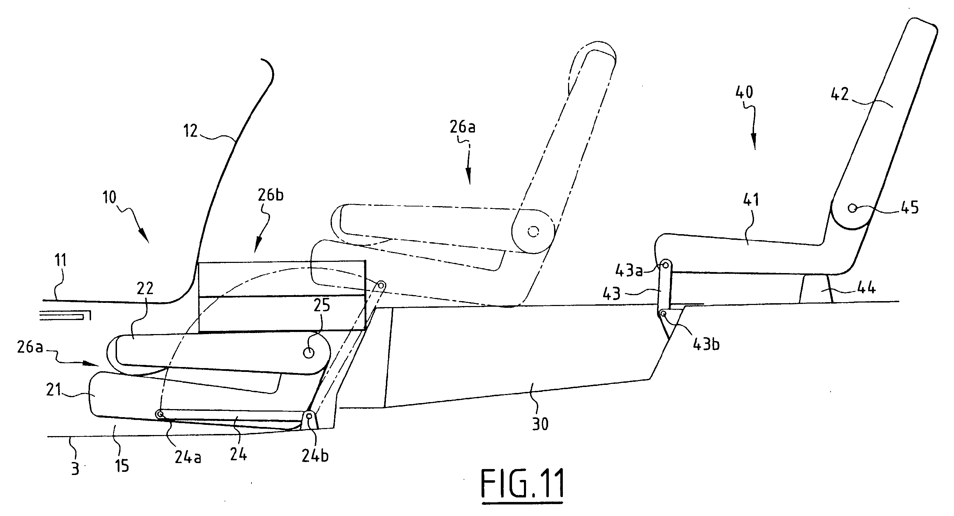

Selon un autre mode de réalisation représenté sur les figures 10 à 12, le plancher 3 du véhicule automobile est pourvu d'un tunnel 6 s'étendant depuis le compartiment moteur jusqu'au train de roulement arrière, par exemple, pour le passage d'un arbre de transmission.

Dans ce cas, la rangée de sièges intermédiaires B est formée de trois sièges indépendants 26 comprenant chacun une assise 21 et un dossier 22.

L'assise 21 et le dossier 22 des sièges latéraux 26a sont déplaçables, comme pour le précédent mode de réalisation représenté sur les figures 6 à 8, par un mécanisme de pivotement constitué par au moins une bielle 24, entre la position d'utilisation et la position escamotée dans laquelle les assises 21 et les dossiers 22 sont placés sensiblement horizontalement dans le logement 15.

Par contre, l'assise 21 et le dossier 22 du siège central 26b sont déplaçables entre la position d'utilisation et la position escamotée dans laquelle cette assise 21 est repliée sur le dossier 22 et dans laquelle ladite assise 21 et ledit dossier 22 sont placés sensiblement horizontalement derrière la rangée de sièges avant A et au-dessus du tunnel 6.

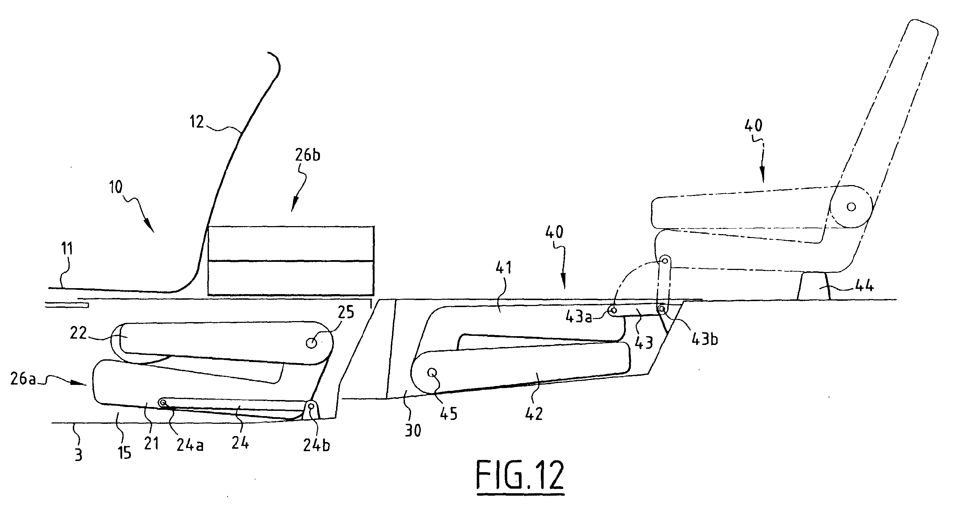

La rangée de sièges arrière C est, dans ce mode de réalisation, formée par deux sièges indépendants 40 comprenant chacun une assise 41 et un dossier 42. Chaque siège 40 est déplaçable au moyen d'un mécanisme à bascule constitué par des bielles 43 par retournement selon une rotation de 180° entre la position d'utilisation et la position escamotée dans laquelle le dossier 42 est rabattu sur l'assise 41 et dans laquelle cette assise et ce dossier replié sont placés sensiblement horizontalement dans le logement 30, ainsi que représenté à la figure 12.

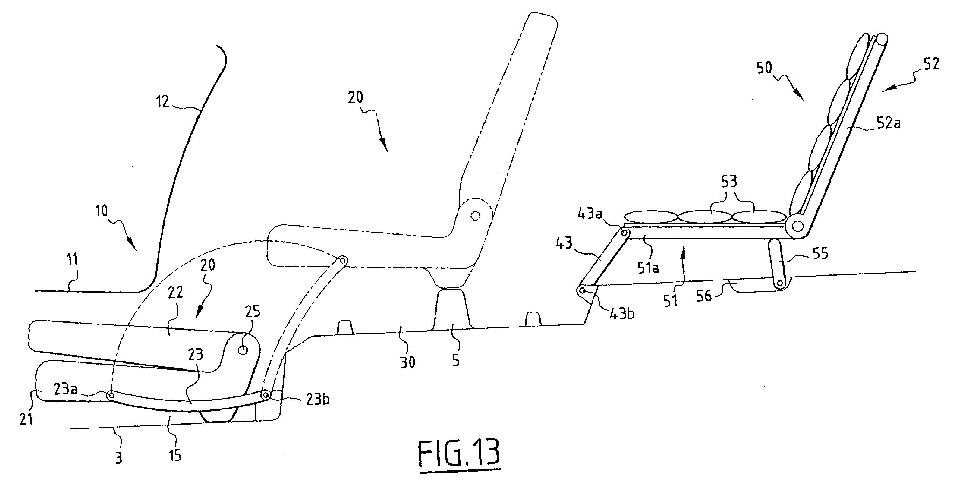

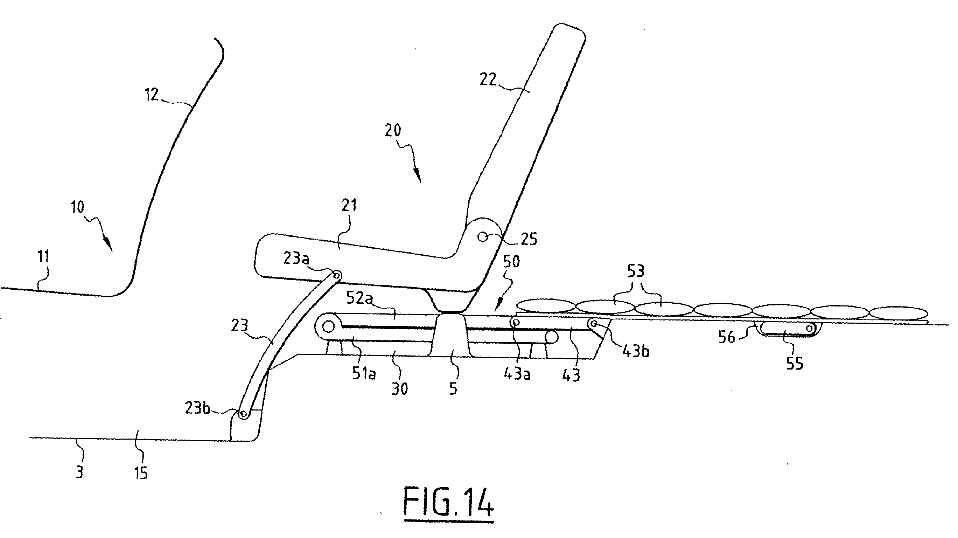

Sur les figures 13 et 14, on a représenté un autre mode de réalisation dans lequel la rangée de sièges arrière C est constituée par au moins une assise 51 et au moins un dossier 52 formant une banquette 50. L'assise 51 et le dossier 52 sont constitués chacun par une structure rigide, respectivement 51a et 52a, sur laquelle est montée de manière amovible une matelassure 53.

La banquette 50 est reliée au plancher 3 par l'intermédiaire d'un mécanisme à bascule constitué par au moins une bielle 43 dont une première extrémité 43a est montée articulée à l'avant de l'assise 51 et dont une seconde extrémité 43b est montée articulée sur le plancher 3 au bord du logement 30. De préférence, le mécanisme à bascule comporte deux bielles s'étendant parallèlement l'une par rapport à l'autre.

La banquette 50 est déplaçable entre une position d'utilisation dans laquelle elle est en appui sur un pied 55 et une position escamotée dans laquelle le dossier 52 est rabattu sur l'assise 51 et dans laquelle cette assise 51 et ce dossier 52 replié sont basculés par retournement selon une rotation de 180° et placés sensiblement horizontalement dans le logement 30 (figure 14). Avant de placer la banquette 50 dans sa position escamotée, la matelassure 53 est retirée et peut être roulée pour être rangée dans le véhicule ou étendue sur le plancher 3 ou sur un sol.

Par ailleurs, la banquette 30 peut être placée dans une position rabattue sur le plancher 3 du véhicule automobile.

Le pied 55 est monté articulé sur le plancher 3 et peut être dissimulé sur une trappe 56 lorsque la banquette 50 est placée en position escamotée.

Par ailleurs, la banquette 50 peut être constituée par deux sièges indépendants.

Enfin, la rangée de sièges intermédiaires B peut être formée par une banquette ou trois ou deux sièges indépendants déplaçables entre une position d'utilisation et une position escamotée représentée à la figure 13 selon un mouvement de pivotement identique à celui décrit pour le mode de réalisation représenté aux figures 7 à 8.

Cette disposition permet également de pouvoir replacer la banquette ou le ou les sièges de la rangée de sièges intermédiaires B en position d'utilisation, ainsi que représenté à la figure 14, au-dessus de la rangée de sièges arrière en position escamotée.

L'agencement selon l'invention permet de pouvoir disposer d'un véhicule dont le nombre de places est variable et qui peut être compris entre deux et sept passagers selon la configuration choisie.

Dans la position escamotée des rangées de sièges intermédiaires et arrière, les sièges peuvent être dissimulés par exemple dans un faux plancher coulissant.

L'agencement selon l'invention offre, en outre, la possibilité de pouvoir disposer d'un plancher de chargement plat et de grande surface, tout en protégeant la matelassure des sièges escamotés, et également de pouvoir repositionner les sièges de la rangée de sièges intermédiaires pour utiliser le véhicule en configuration de quatre ou cinq places avec un plancher arrière plat.

Cet agencement permet donc, en effectuant des manoeuvre simples, de moduler le nombre de places en fonction des passagers, ainsi que le volume de chargement selon les charges à transporter.

## Revendications

1. Agencement d'un ensemble de sièges dans un habitacle de véhicule automobile, du type comportant, sur un plancher (3) de ce véhicule, trois rangées de sièges, une rangée de sièges avant comprenant deux sièges (10) formés chacun par une assise (11) et un dossier (12), une rangée de sièges intermédiaires et une rangée de sièges arrière, **caractérisé en ce que** la rangée de sièges intermédiaires comprend au moins une assise (21) et au moins un dossier (22) déplaçables par pivotement entre une position d'utilisation et une position escamotée dans laquelle ledit dossier (22) est replié sur ladite assise (21) correspondante et dans laquelle ladite assise (21) et ledit dossier (22) libèrent le plancher (3) derrière la rangée de sièges avant et **en ce que** la rangée de sièges arrière comprend au moins une assise (41 ; 51) et au moins un dossier (42 ; 52) déplaçables par retournement entre une position d'utilisation et une position escamotée dans laquelle au moins ladite assise (41 ; 51) est placée dans un logement (30) ménagé au-dessous de la rangée de sièges intermédiaires et forme une partie du plancher (3).

2. Agencement selon la revendication 1, **caractérisé en ce que** ladite assise (21) et ledit dossier (22) de la rangée de sièges intermédiaires forment une banquette (20) ou trois sièges (26) indépendants ou deux sièges indépendants.

3. Agencement selon la revendication 1 ou 2, **caractérisé en ce que** ladite assise (21) et ledit dossier (22) de la rangée de sièges intermédiaires sont déplaçables par un mécanisme de pivotement (24) entre la position d'utilisation et la position escamotée dans laquelle cette assise (21) et ce dossier (22) sont placés sensiblement verticalement derrière la rangée de sièges avant.

4. Agencement selon la revendication 1 ou 2, **caractérisé en ce que** ladite assise (21) et ledit dossier (22) de la rangée de sièges intermédiaires sont déplaçables par un mécanisme de pivotement (24) entre la position d'utilisation et la position escamotée dans laquelle cette assise (21) et ce dossier (22) sont placés sensiblement horizontalement dans un logement (15) ménagé au-dessous de la rangée de sièges avant.

5. Agencement selon la revendication 1 ou 2, **caractérisé en ce que** ladite assise (21) et ledit dossier (22) des sièges (26a) latéraux de la rangée de sièges intermédiaires sont déplaçables par un mécanisme de pivotement (24) entre la position d'utilisation et la position escamotée dans laquelle les assises (21) et les dossiers (22) sont placés sensiblement horizontalement dans un logement (15) ménagé au-dessous de la rangée de sièges avant et **en ce que** ladite assise (21) et ledit dossier (22) du siège (26b) central sont déplaçables entre la position d'utilisation et la position escamotée dans laquelle cette assise (21) et ce dossier (22) sont placés sensiblement horizontalement derrière la rangée de sièges avant.

6. Agencement selon l'une quelconque des revendications 3 à 5, **caractérisé en ce que** chaque mécanisme de pivotement est formé par au moins une bielle (24) dont une première extrémité (24a) est montée articulée au-dessous de l'assise (21) correspondante et dont une seconde extrémité (24b) est montée articulée sur le fond du logement (15) ménagé au-dessous de la rangée de sièges avant.

7. Agencement selon la revendication 1, **caractérisé en ce que** ladite assise (41 ; 51) et ledit dossier (42 ; 52) de la rangée de sièges arrière forment une banquette (40) ou deux sièges (50) indépendants.

8. Agencement selon l'une quelconque des revendications 1,3 ou 7, **caractérisé en ce que** ladite assise (41) et ledit dossier (42) de la rangée de sièges arrière sont déplaçables au moyen d'un mécanisme à bascule (43) par retournement selon une rotation de 180° entre la position d'utilisation et la position escamotée dans laquelle cette assise (41) est placée sensiblement horizontalement dans le logement (30) ménagé au-dessous de la rangée de sièges intermédiaires et ce dossier (42) est placé sensiblement horizontalement dans un logement (15) ménagé au-dessous de la rangée de sièges avant.

9. Agencement selon l'une quelconque des revendications 1, 4, 5 ou 7, **caractérisé en ce que** ladite assise (41 ; 51) et ledit dossier (42 ; 52) de la rangée de sièges arrière sont déplaçables au moyen d'un mécanisme à bascule (43) par retournement selon une rotation de 180° entre la position d'utilisation et la position escamotée dans laquelle le dossier (42 ; 52) est rabattu sur l'assise (41 ; 51) et dans laquelle cette assise (41 ; 51) et ce dossier (42 ; 52) repliés sont placés sensiblement horizontalement dans le logement (30) ménagé au-dessous de la rangée de sièges intermédiaires.

10. Agencement selon la revendication 8 ou 9, **caractérisé en ce que** chaque mécanisme à bascule est formé par au moins une bielle (43) dont une première extrémité (43a) est montée articulée à l'avant de l'assise (41 ; 51) correspondante et dont une seconde extrémité (43b) est montée articulée sur le plancher (3) au bord du logement (30) ménagé au-dessous de la rangée de sièges intermédiaires.

11. Agencement selon l'une quelconque des revendications précédentes, **caractérisé en ce que** ladite assise (51) et ledit dossier (52) de la rangée de sièges arrière comportent une structure rigide (51a ; 52a) et une matelassure (53) amovible.
